# EUROPEAN PATENT SPECIFICATION

(11) **EP 4 198 664 B1**
(45) Date of publication and mention of the grant of the patent: **25.02.2026**
(21) Application number: 22213545.1
(22) Date of filing: 14.12.2022
(51) Int. Cl.: G05B 19/418

(54) **A METHOD FOR MONITORING A FOOD PROCESSING SYSTEM**
VERFAHREN ZUR ÜBERWACHUNG EINES LEBENSMITTELVERARBEITUNGSSYSTEMS
PROCÉDÉ DE SURVEILLANCE D'UN SYSTÈME DE TRAITEMENT D'ALIMENTS

(30) Priority: 17.12.2021 EP 21215685
(43) Date of publication of application: 21.06.2023
(73) Proprietor: Tetra Laval Holdings & Finance S.A., 1009 Pully (CH)
(72) Inventor: Hallgren, Erik, 22186 Lund (SE); Olsson, Niclas, 22186 Lund (SE); Mogard, Alexander, 22186 Lund (SE); Hansson, Marcus, 22186 Lund (SE); Kemvik, Anton, 22186 Lund (SE); Söder, Joakim, 221 86 Lund (SE); Glisic, Nemanja, 11070 Belgrade (RS); Martin, Elena, 28500 Arganda Del Rey (ES)
(74) Representative: Tetra Pak Patent Attorneys

(56) References cited:
- EP-A2- 2 244 147
- US-A1- 2013 096 727

## Description

### Technical Field

The invention generally relates to food production. More particularly, it is related to a method for monitoring a food processing system, and the food processing system.

### Background Art

Today, many food producers are using an automation and information solution, such as Tetra Pak^{®} PlantMaster, to ensure that a food processing system is performing as expected. By having sensors provided in the food processing system, data can continuously be captured and processed such that operators may be notified about service needs or other matters hindering the food processing system to operate at its full potential. In addition, by having food processing units of the system arranged to be controlled remotely, settings in the system or in the food production units may be controlled more efficiently, thereby increasing cost efficiency.

By having access to vast amount of data captured from the food production system and also having the possibility to easily adapt the system provides for that food production systems using a modern automation and information solution can process food products more efficiently also in terms of environmental impact. Using less resources for producing food products is namely both good from a cost perspective as well as an environmental perspective.

Today, in order to achieve more resource-efficient food production, settings of different food production units are carefully monitored and controlled. For instance, a temperature in a heat exchanger is carefully monitored to assure that the food product is sufficiently heated such that unwanted microorganisms are killed off, but also to provide for that the food product is not overheated, thereby avoiding excessive fouling and possibly also a food product not fulfilling quality requirements due to taste or color deviations.

The automation and information solution may also be used for making cleaning more resource-efficient. By monitoring the amount of water used for cleaning a food production unit, or a group of food production units, as well as cleaning time and water flow, it is made possible to optimize the cleaning process such that water consumption, cleaning agent consumption and time for cleaning can be held at levels not possible to achieve without having continuous data provided from the system. In addition, by carefully monitoring, the risk of having food residues left in the system after the cleaning can be further reduced.

Further background art can be found in US 2013/096727 A1 relating to managing and monitoring resources in a production environment with a focus on efficiency and optimization and in EP 2 244 147 A2 relates to managing and monitoring energy and resources in a production environment taking into account factors, such as recycling requirements and regulatory compliance in the production process.

Even though modern automation and information solutions provide for that food production of today is more resource-efficient than before such solutions were widespread, there is a need to further improve. Having resource-efficient food production has namely a direct effect on cost, which is positive since food safe to consume in this way can be made available to more people. By pushing down cost even further without comprising on food safety, even more people can benefit. In addition and also very important, by providing more resource-efficient food production, the environmental impact of the food production can be further reduced.

### Summary

It is an object of the invention to at least partly overcome one or more of the above-identified limitations of the prior art. In particular, it is an object to provide granular information about the food processing system to the extent that food production information for a specific food product can be provided. For instance, the information can comprise which food production units that were used for producing the specific food product and also how these food production units were set when producing the specific food product. It is a further object to use this food production specific information to determine an environmental impact measure for the specific food product, e.g. a package filled with food product. Still an object is to provide a method on how to distribute utility consumption commonly used by several food production units, e.g. cleaning agent usage for cleaning a group of food production units. Yet another object is to provide a method how food production can be scheduled to increase usage of locally produced electricity. Still an object is to provide a method how food production can be scheduled to increase usage of green electricity, i.e. electricity produced from renewable resources, such as wind, solar and hydro.

According to a first aspect, it is provided a computer-implemented method for monitoring a food processing system, arranged to produce a food product, using a data processing apparatus, said method comprising receiving process traceability data related to the food product, wherein the process traceability data may comprise information about which food processing units of the food processing system that were involved in processing the food product as well as during which time slots the food processing units were involved for processing the food product, receiving process event data related to the food processing units of the food production system, wherein the process event data may comprise information about state changes of the food production units that occurred during processing of the food product as well as points of time when the state changes occurred, receiving settings of the processing units associated with different states, determining the settings used for the food production units during different time slots by combining the process event data and the settings of the processing units associated with the different states, and determining the settings of the food production units used for processing the food product by combining the process traceability data and the settings used for the food production units during the different time slots, and providing the settings of the food production units used for processing the food product.

An advantage of having the settings used in the food processing units for producing the food product is that this provides the possibility to link different measures specifically to individual packages or storage units holding the liquid food product. For instance, the settings used may be linked to a carton package holding the food product, but it may also be that the settings are linked to a storage tank used for transporting the food product from e.g. a food processing plant to a packaging plant. In addition it is possible to have different settings for different parts of the packages. For instance, the individual packages may be primary packages, but also secondary packages, i.e. packages holding primary packages, such as a carton tray holding a group of primary package. By having this settings available possibilities to improve e.g. energy efficiency is provided.

The method may further comprise receiving environmental impact data associated with different settings for different food production units, and determining an environmental impact measure, such as carbon footprint, of the food product by combining the settings of the food production units used for processing the food product with the environmental impact data.

An advantage of first determining the settings and then based on the settings determine the environmental impact measure is that updates can easily be made. For instance, in case adjusted environmental impact for a particular setting, this can easily be done if using this suggested modular approach.

The method may further comprise retrieving meter coverage data, wherein the meter coverage data may comprise links between the food processing units of the food processing system and meters provided in the food processing system, combining the process traceability data and the meter coverage data to identify a first type of meters and a second type of meters, wherein the first type of meters is related to single food processing units used for processing the food product and the second type of meters are related to multiple food processing units of which at least a sub-set is used for processing the food product, retrieving first type utility consumption data for the first type meters for the time slots the food processing units linked to the first-type meters were used for processing the food product, retrieving second type utility consumption data for the second type meters for the time slots the sub-set of the food processing units linked to the second-type meters were used for processing the food product, retrieving distribution keys for the second-type utility consumption data, assigning a part of the second-type utility consumption data to the sub-set of food processing units by using the distribution keys, aggregating the first-type utility consumption data and the part of the second-type utility consumption data into a total utility consumption data for the food product, and transforming the total utility consumption data into the environmental impact measure.

An advantage with the above is that both direct and indirect utility consumption connected to the processing of the food product may be taken into account when e.g. determining the environmental impact measure.

The first and/or second utility consumption data may comprise water usage, electricity usage, pressurized air usage, sterile air usage, amount of food waste generated, and/or amount of chemicals, such as cleaning agents, used.

The method may further comprise receiving electricity production data for different time slots from an electricity generation plant, such as a solar cell plant, placed on a food production site together with the food processing system, adjusting the environmental impact measure by combining the electricity usage of the first and/or second utility consumption data and the electricity production data for the different time slots.

An advantage with this is that locally produced electricity may be taken into account when determining e.g. the environmental impact measure. By having this possibility it becomes possible to quantify effects on e.g. solar panel investment on individual food products.

The method may further comprise receiving weather forecast data, forecasting the electricity production data for different time slots based on the weather forecast data, identifying a suggested production scheme, including start and stop points of time, based on forecasted alternatives for the different time slots in combination with estimated electricity usage of the first and/or second utility consumption data for a coming food processing of the food product, and providing the suggested production scheme.

An advantage of this is that scheduling may be adapted such electricity intense processes are made when electricity is available from local electricity production, e.g. solar panels or wind turbines. It is further possible to schedule based on when green electricity is available also from off site location, i.e. electricity produced from renewable energy sources placed outside the food production site.

The method may further comprise filling the food product into a package, wherein the package is provided with an identification mark, and linking the identification mark to the environmental impact measure.

By doing the above, a user reading the identification mark with a mobile phone or other suitable device may be forwarded to a website or similar on which the environmental impact measure as well as information related to how the measure has been calculated is provided.

The identification mark may be linked to a set of instructions configured to be executed on a user device when the identification mark is read by the user device, further comprising receiving an identification mark read receipt indicating that the identification mark has been read by the user device, transmitting a location request to the user device, receiving user device location data in response to the location request, retrieving food production plant location data using the identification mark, and determining a transportation environmental impact measure based on the user device location data and the food production plant location data.

By using the location of the user device, e.g. the mobile phone, used for reading the identification mark and combining this with the location of the food production plant, a distance between the two can be determined and based on this the environmental effect on transportation can be estimated and also taken into account. As an alternative to using the location of the user device, the user may input a location for purchase or use this location instead of the user device location for determining the transportation environmental impact measure.

The method may further comprise filling the food product into the package, and printing text and/or numbers corresponding to the environmental impact measure on the package.

An advantage of printing the text and/or numbers associated with the environmental impact measure on the package is that the user, i.e. the consumer, can easily see this and use this as a factor when deciding which product to purchase.

The different states may comprise a start-up state during which the food production units are prepared for food production, a recovery state during which the food product held in the food production units are collected in a recovery tank, a cleaning-in-place state during which all or part of the food production units are cleaned, and a close-down state during which the food production units are emptied.

The method may further comprise receiving food product raw material environmental impact measure linked to food raw material, and the step of determining the environmental impact measure may further comprise adding the food product raw material environmental impact measure.

In this way also the environmental impact of the food raw material, e.g. raw milk, can be taken into account.

The method may further comprise receiving a packaging material batch arranged to be formed into the package, reading a packaging material batch identification code placed on the packaging material batch, transmitting a request for a packaging material environmental impact measure linked to the packaging material batch identification code, and receiving the packaging material environmental impact measure linked to the packaging material batch identification code in response to the request, wherein the step of determining the environmental impact measure further comprises adding the packaging material environmental impact measure.

An advantage with this is that when the packaging material batch identification code of the packaging material batch, e.g. a reel of packaging material in carton packages are to be produced, is read in order to find information about the packaging material in order to be able to adjust settings of a packaging machine accordingly, the packaging material environmental impact measure may be read at the same time. By doing so, the environmental impact of the packaging material, on batch level, may also be taken into account when determining the environmental impact measure for the food product.

According to a second aspect it is provided a food processing system arranged to produce a food product. The system comprises food processing units, and a data processing apparatus comprising a traceability module configured to process traceability data related to the food product, wherein the process traceability data comprises information about which food processing units of the food processing system that were involved in processing the food product as well as during which time slots the food processing units were involved for processing the food product, a process event module configured to receive process event data related to the food processing units of the food production system, wherein the process event data comprises information about state changes of the food production units that occurred during processing of the food product as well as points of time when the state changes occurred, a settings-to-state identifier module configured to receive settings of the processing units associated with different states, and determine the settings used for the food production units during different time slots by combining the process event data and the settings of the processing units associated with the different states, and a settings-for-food product module configured to determine the settings of the food production units used for processing the food product by combining the process traceability data and the settings used for the food production units during the different time slots.

The same features and advantages as presented above with respect to the first aspect also apply to this second aspect.

The food processing system may further comprise an environmental impact measure determination module configured to receive environmental impact data associated with different settings for different food production units, and to determine an environmental impact measure, such as carbon footprint, of the food product by combining the settings of the food production units used for processing the food product with the environmental impact data.

The different states may comprise a start-up state during which the food production units are prepared for food production, a recovery state during which the food product held in the food production units are collected in a recovery tank, a cleaning-in-place state during which all or part of the food production units are cleaned, and a close-down state during which the food production units are emptied.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 schematically illustrates a processing system.
Fig. 2 is an example of process traceability data.
Fig. 3 is an example of meter coverage data.
Fig. 4 illustrates data flows related to determining an environmental impact measure for a specific food product.
Fig. 5 is a flowchart illustrating a method for monitoring a food processing system.
Fig. 6 generally illustrates how an environmental impact caused by transportation can be weighed into the environmental impact measure.

### Detailed Description

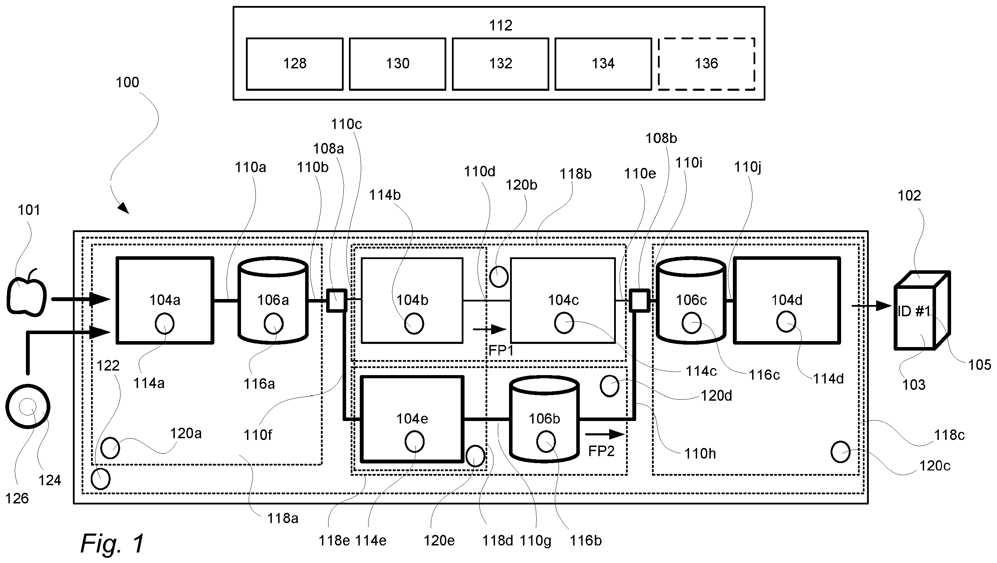

Fig. 1 generally illustrates a food processing system 100. As illustrated, a food raw material 101, such as raw milk or, as illustrated, apples, can be fed into the system 100. In the system 100, the food raw material 101 can be processed using a wide range of different food processing units 104a-e, including tanks 106a-c, for transforming the food raw material 101 into a food product 102. In the example illustrated, the food product 102 is exemplified to be held in a carton package 103 filled with food product, but other types of package can also be applied. In addition, the general concept is also not restricted to liquid food products. However, even though the general concept is not restricted to liquid food products, some special considerations have to be made when processing liquid food products. For instance, since liquid food processing is made continuously or in batches, state changes of the food processing units 104a-e are to be monitored to form links between a particular part of the food product placed in a particular package 103. The same apply does not apply in discrete food processing. For instance, in a meat processing system in which each piece of meat is handled individually, i.e. discrete food production, different events can easily be linked to specific pieces of meat.

As illustrated, the package 103 may be provided with an identification mark 105. By using this mark, a link between the food product 102 held in the package 103 and processing history of the food product 102, held in the package 103, can be maintained even after the food product 102 leaves the food processing system 100 up until the package 103 is opened. The identification mark 105 may be a printed code, such as a QR code, or it may be an identification mark integrated in the packaging material of the package 103, e.g. a pattern formed by magnetic particles. Further, it may be a RFID code or any other type of technology for identification marking.

The food processing units 104a-e, including the tanks 106a-c, can be connected by pipe sections 110a-j and valves 108a-b may be used for directing the food product 102 through the food processing system 100. By way of example, the valves 108a,b may be used for directing the food product 102 into a first flow path FP1 or second flow path FP2, wherein the two flow paths are parallel and involves different food processing units.

To feed information from the food processing system 100 into a data processing apparatus 112, which may be an on-site computer, a remotely placed server or a combination of on-site computers and remote servers, food processing unit sensors 114a-e can be provided in the food processing units 104a-e. Even though illustrated that each every food processing unit 104a-e is provided with a sensor, it may also be possible to have some food processing units without sensors. However, generally, the more of the food processing units 104a-e provided with the food processing unit sensors 114a-e, also referred to as meters, the better monitoring of the food processing system 100. Also the tanks 106a-c may be provided with tank sensors 116a-c. As for the food processing units 104a-e, it is not required to have each tank provided with sensors, even though it may be requested by operators of the food processing system to at least have level sensors and temperature sensors in the tanks 106a-c to be able to monitor level and temperature in the tanks 106a-c. Herein the food processing unit sensors 114a-e and the tank sensors 116a-c are commonly referred to as a first type of meters.

Many food processing systems are divided into sub-system. In the example illustrated, five different sub-systems 118a-e are provided. The sub-systems may be overlapping and they may be formed for different purposes. For instance, a cleaning-in-place (CIP) sub-system may be formed for a group of food processing units to provide for that cleaning is provided in an efficient manner. Another reason for forming a sub-system is that a group of food processing units is commonly supplied with pressurized air. As illustrated in fig.1, the sub-systems 118a-e may be provided with sub-systems sensors 120a-e. In addition, a full system sensor 122 may be provided to capture data related to the system as a whole. Herein the sub-system sensors 120a-e and the full system sensor 122 are together referred to as a second type of meters.

A packaging material batch 124, e.g. a reel of packaging material, may also be input to the food processing system 100. To be able to link the packaging material batch 124 with e.g. amount of energy used for producing the packaging material batch or origin of the raw material used for producing the packaging material batch, a packaging material batch identification code 126 may be provided on the packaging material batch 124. By using this identification code 126, information related to the packaging material batch 124 may be accessed via a e.g. a database provided by the packaging material producer.

The data processing apparatus 112 may comprise a traceability module 128, a process event module 130, a settings-to-state identifier module 132, a settings-for-food product module 134, and optionally an environmental impact measure determination module 136. These modules may be software-implemented. Even though illustrated as part of the data processing apparatus 112, a distributed approach may also be applied in which parts or the whole modules are placed elsewhere, e.g. in a cloud computing environment. Further, even though not explicitly illustrated, data may be transmitted to and from the system 100 and the different modules.

More particularly, the traceability module 128 may be configured to process traceability data 200 related to the food product 102, wherein the process traceability data 200 can comprise information about which food processing units of the food processing system 100 that were involved in processing the food product 102 as well as during which time slots the food processing units were involved for processing the food product 102.

The process event module 130 may be configured to receive process event data 202 related to the food processing units of the food production system, wherein the process event data 202 comprises information about state changes of the food production units that occurred during processing of the food product 102 as well as points of time when the state changes occurred.

The settings-to-state identifier module 132 may be configured to receive settings 204 of the processing units 104a-e, 106a-c associated with different states, and determine the settings used for the food production units during different time slots by combining the process event data 202 and the settings of the processing units 204 associated with the different states.

The settings-for-food product module 134 may be configured to determine the settings of the food production units 104a-e, 106a-c used for processing the food product 102 by combining the process traceability data 200 and the settings 204 used for the food production units 104a-e, 106a-c during the different time slots.

The environmental impact measure determination module 136 may be configured to receive environmental impact data 406 associated with different settings for different food production units 104a-e, 106a-c, and to determine an environmental impact measure 412, such as carbon footprint, of the food product 102 by combining the settings of the food production units 104a-e, 106a-c used for processing the food product 102 with the environmental impact data 406.

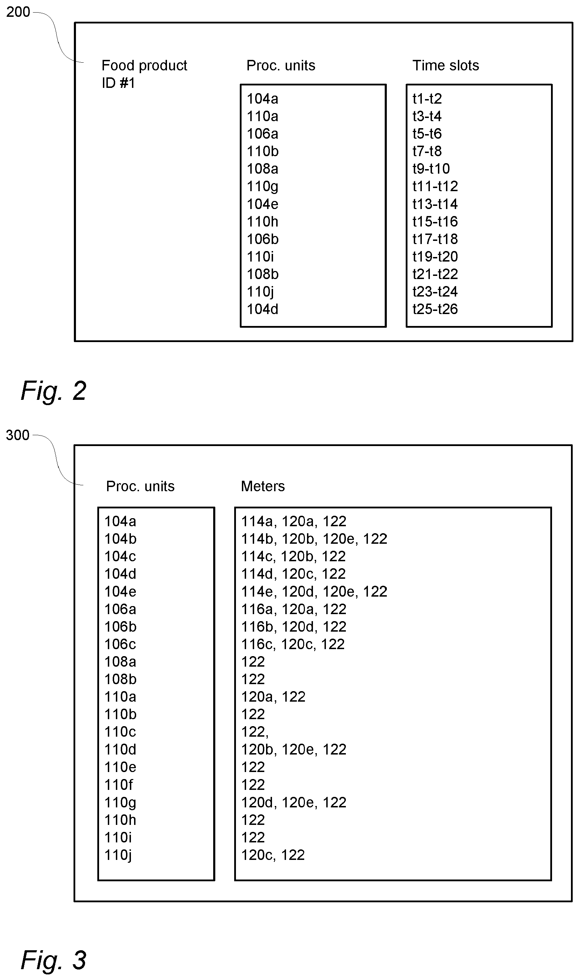

Fig. 2 illustrates an example of the process traceability data 200. As illustrated, for a particular food product, herein denoted "ID #1" it can be seen which processing units that were involved and during which time slots. The food processing units involved are marked in bold in fig. 1.

Fig. 3 illustrates an example of meter coverage data 300. The meter coverage data 300 provides information about which sensors, or meters, that are related to which processing units. As illustrated, both first type of sensors and second type of sensors are taken into account.

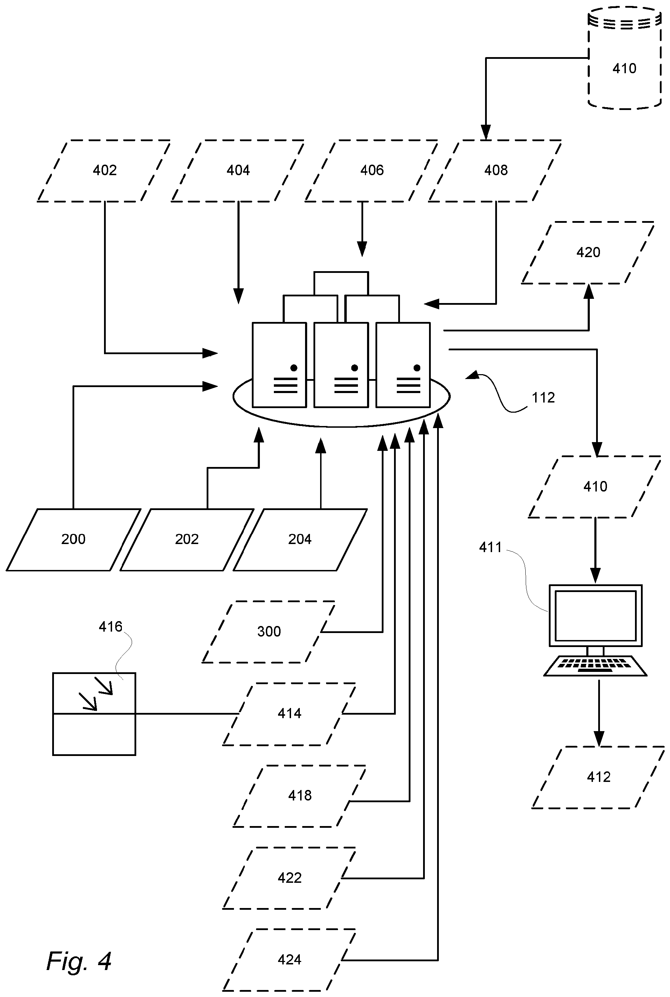

Fig. 4 illustrates generally how data can be transmitted to and from the data processing apparatus 112 by way of example. As illustrated and as described above, the process traceability data 200, the process event data 202 and the settings 204 of the processing units 104a-e, 106a-c associated with different states may be received by the data processing apparatus 112. The settings 204 may be set values or actual values, e.g. a temperature set to be used in a specific state or an actual temperature used in the specific state. To link the different meters, or sensors, to different food processing units, the meter coverage data 300 can be used.

First utility consumption data 402 for the first type of meters may be received such that consumption data captured by the food processing unit sensors 114a-e can be related to the food product 102, in turn providing for that an environmental impact measure 412 may be determined.

Second type utility consumption data 404 for the second type of meters may also be received such that consumption data captured by the sub-system sensors 120a-e can be related to the food product 102. Since this consumption data is related to several food processing units, distribution keys 408 retrieved from a database 410, which may be shared between several food processing systems, can be used for distributing the consumption data over the several food processing units.

Environmental impact data 406 associated with different settings for different food production units 104a-e may also be received. By combining the settings of the food production units 104a-e used for processing the food product 102 with the environmental impact data 406, an environmental impact measure 412, such as carbon footprint, of the food product 102 can be determined.

The first-type utility consumption data 402 and part of the second-type utility consumption data 404, determined by using the distribution keys 408, can be aggregated into a total utility consumption data 410. A computer 411 may be used for transforming the total utility consumption data 410 into the environmental impact measure 412. However, even though not illustrated, the data processing apparatus 112 may also transform the total utility consumption data 410 into the environmental impact measure 412.

Further, in case the food processing system 100 is placed on a site where an electricity production plant, e.g. solar panels, is provided, electricity production data 414 for different time slots may be received from the electricity generation plant 416. The environmental impact measure 412 may be adjusted by combining the electricity usage of the first and/or second utility consumption data 402, 404 and the electricity production data 414 for the different time slots. Put differently, in case electricity has been produced on site during processing of the food product 102 this may be taken into account and connected to the food product 102. For instance, in case the food product 102 is produced by locally produced electricity, i.e. by the electricity production plant 416, this may be shown in a lower energy consumption number printed on the package 103 of the food product 102.

Since the electricity production data 414 depends in some cases on the weather, e.g. solar panels are producing more electricity in sunny weather than in rainy weather, weather forecast data 418 may also be received and taken into account. By being able to forecast the electricity production data 414, a suggested production scheme 420 may be provided.

In addition, a food raw material environmental impact measure 422 may be received. By having access to the environmental impact of the raw food material 101 as well, the accuracy of the environmental impact measure 412 can be further improved.

In a similar manner, a packaging material environmental impact measure 424 can be received. This may be received via the packaging material batch identification code 126, e.g. in that the identification code is read and uploaded together with a request to a server held by the packaging material provider, and in response to the request receive the food raw material environmental impact measure 422. By having access to the environmental impact of the packaging material as well, the accuracy of the environmental impact measure 412 can be further improved.

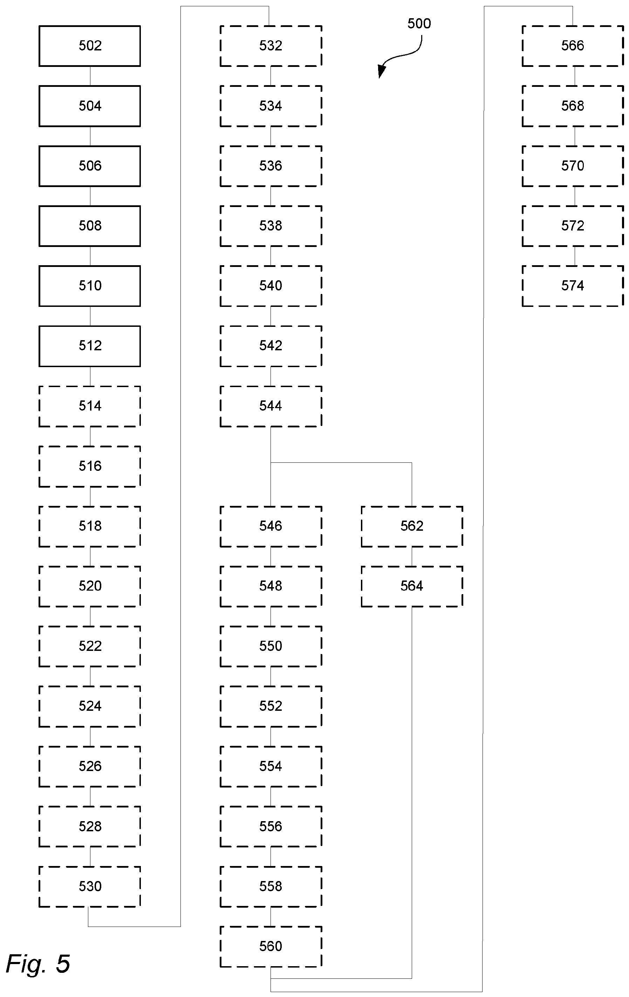

Fig. 5 is a flowchart illustrating a method 500 for monitoring the food processing system 100. In a first step 502, the process traceability data 200 related to the food product 102 can be received. In a second step 504, the process event data 202 related to the food processing units of the food production system 100 can be received. In a third step 506, the settings 204 of the processing units 104a-e associated with different states can be received. In a fourth step 508, the settings used for the food production units 104a-e during different time slots by combining the process event data 202 and the settings of the processing units 204 associated with the different states can be determined. In a fifth step 510, the settings of the food production units 104a-e used for processing the food product 102 by combining the process traceability data 200 and the settings used for the food production units during the different time slot can be determined. In a sixth step 512, the settings of the food production units 104a-e used for processing the food product 102 can be determined.

Optionally, in a seventh step 514, the environmental impact data 406 associated with different settings for different food production units 104a-e can be received, and, in an eighth step 516, the environmental impact measure 412, such as carbon footprint, of the food product 102 by combining the settings of the food production units 104a-e used for processing the food product 102 with the environmental impact data 406 can be determined.

Optionally, in a ninth step 518 the meter coverage data 300 can be retrieved, wherein the meter coverage data 300 comprises links between the food processing units of the food processing system 100 and meters 114a-e, 116a-c, 120a-e, 122 provided in the food processing system 100. In a tenth step 520, the process traceability data 200 and the meter coverage data 300 can be combined to identify the first type of meters 114a-e, 116a-c and the second type of meters 120a-e, 122, wherein the first type of meters 114a-e, 116a-c is related to single food processing units used for processing the food product 102 and the second type of meters 120a-e, 122 is related to multiple food processing units of which at least a sub-set is used for processing the food product 102. In an eleventh step 522, the first type utility consumption data 402 for the first type meters 114a-e, 116a-c for the time slots the food processing units linked to the first-type meters 114a-e, 116a-c were used for processing the food product 102 can be retrieved. In a twelfth step 524, the second type utility consumption data 404 for the second type meters 120a-e, 122 for the time slots the sub-set of the food processing units linked to the second-type meters 120a-e, 122 were used for processing the food product can be retrieved. In a thirteenth step 526, the distribution keys 408 for the second-type utility consumption data 404 can be retrieved. In a fourteenth step 528, a part of the second-type utility consumption data 404 can be assigned to the sub-set of food processing units by using the distribution keys 408. In a fifteenth step 530, the first-type utility consumption data 402 and the part of the second-type utility consumption data 404 can be aggregated into the total utility consumption data 410 for the food product 102. In a sixteenth step 532, the total utility consumption data 410 can be transformed into the environmental impact measure 412.

Optionally, in a seventeenth step 534, the electricity production data 414 for different time slots from the electricity generation plant 416, such as a solar cell plant, placed on a food production site together with the food processing system 100 can be received. In an eighteenth step 536, the environmental impact measure 412 can be adjusted by combining the electricity usage of the first and/or second utility consumption data 402, 404 and the electricity production data 414 for the different time slots.

Optionally, a nineteenth step 538, the weather forecast data 418 can be received, e.g. from a weather data service operator. In a twentieth step 540, the electricity production data 414 for different time slots can be forecasted based on the weather forecast data 418. In a twenty-first step 542, the suggested production scheme 420, including start and stop points of time, based on forecasted alternatives for the different time slots in combination with estimated electricity usage of the first and/or second utility consumption data 402, 404 for a coming food processing of the food product 102 can be identified. In twenty-second step 544, the suggested production scheme 420 can be provided, e.g. as a notification to the operator in a scheduling software.

Optionally, in a twenty-third step 546, the food product 102 can be filled into the package 103, wherein the package 103 can be provided with the identification mark 105, and, in a twenty-fourth step 548, the identification mark 105 can be linked to the environmental impact measure 412.

Optionally, in a twenty-fifth step, an identification mark read receipt 602 indicating the identification mark 105 has been read by a user device 600, such as a mobile phone, can be received. Next, in a twenty-sixth step 552, a location request 604 can be transmitted to the user device 600. In a twenty-seventh step 554, a user device location data 606 can be received in response to the location request 604. In a twenty-eighth step 556, food production plant location data 608 can be retrieved using the identification mark 105. In a twenty-ninth step 558, a transportation environmental impact measure 610 can be determined based on the user device location data 606 and the food production plant location data 608, e.g. a distance between the two may be used for estimating the environmental impact of the transport between the two locations. In a thirtieth step 560, the transportation environmental impact measure 610 may be transmitted to the user device 600 such that this can be communicated to the user of the user device. Alternatively or in addition, the environmental impact measure 412, determined in the seventh step 514, may further comprise adding the transportation environmental impact measure 610 to the environmental impact measure 422 such that also the environmental impact of the transportation is taken into account.

Optionally, as an alternative to the twenty-third 546 to the thirtieth step 560, in a thirty-first step 562, the food product 102 can be filled into the package 103, and in a thirty-second step 564, text and/or numbers corresponding to the environmental impact measure 412 can be printed on the package 103.

Optionally, in a thirty-third step 566 the food product raw material environmental impact measure 422 can be received and linked to food raw material 101, and the seventh step 514 may further comprise adding the food product raw material environmental impact measure 422 to the environmental impact measure 412 or in any other way take this into account when determining the environmental impact measure 412, i.e. the total environmental impact of the food product 102.

Optionally, in a thirty-fourth step, the packaging material batch 124 arranged to be formed into the package 103 can be received. In a thirty-fifth step 570, the packaging material batch identification code 126 placed on the packaging material batch 124 can be read. In a thirty-sixth step 572, the request for the packaging material environmental impact measure 424 linked to the packaging material batch identification code 126 can be transmitted. In the thirty-seventh step 574, the packaging material environmental impact measure 424 linked to the packaging material batch identification code 126 can be received in response to the request. The seventh step 514, in which the environmental impact measure 514 can be determined may further comprise adding the packaging material environmental impact measure 424 or in any other way take the packaging material environmental impact measure 424 into account.

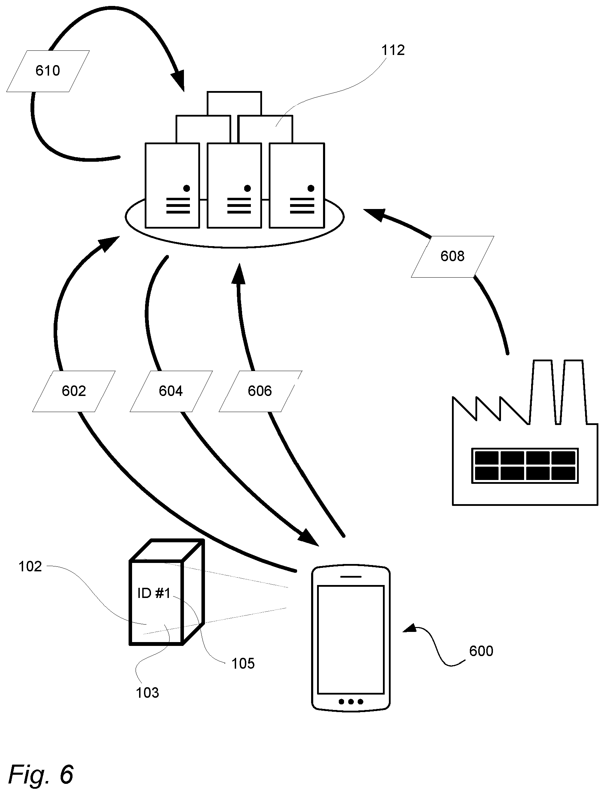

Fig. 6 illustrates generally how the environmental effect of transportation may be taken into account in further detail.

Before consuming the food product 102, a user may read the identification mark 105 of the package 103. Once having read the identification mark 105, the identification mark read receipt 602 can be transmitted from the user device 600 to the data processing apparatus 112. For instance, the identification mark 105 may be a QR code linked to a set of instructions that triggers the transmission of the identification mark read receipt 602 to the data processing apparatus 112. The transmission of the identification mark read receipt 602 may require an acceptance from the user before being executed.

In response to the identification mark read receipt 602, a location request 604 may be sent from the data processing apparatus 112 to the user device 600. In response to this request, user location data 606 may be transmitted from the user device 600, which may be a mobile phone equipped with a camera, to the data processing apparatus 112. In addition, the food plant location data 608, i.e. a location of the food production site, can be provided to the data processing apparatus 112. By having information about both where the food product 102 is consumed and where the food product 102 was produced, the transportation environmental impact measure 610. As described above, this may be taken into account when determining the environmental impact measure 412, but it may also be presented on its own to the user via the user device 600. Even though only one food plant is illustrated, several food plants may be involved and the food plant location data 608 may comprise several locations. For instance, the food product 102 may have been processed at two different sites and packaged in a third site, and transported to a distribution center on a fourth site. All of these sites may form basis for the food plant location data 608. In addition, the way of transportation between the different sites may also be taken into account.

From the description above follows that, although various embodiments of the invention have been described and shown, the invention is not restricted thereto, but may also be embodied in other ways within the scope of the subject-matter defined in the following claims.

## Claims

1. A computer-implemented method (500) for monitoring a food processing system (100), arranged to produce a food product (102), using a data processing apparatus (112), said method comprising
receiving (502) process traceability data (200) related to the food product (102), wherein the process traceability data (200) comprises information about which food processing units (104a-e) of the food processing system (100) that were involved in processing the food product (102) as well as during which time slots the food processing units were involved for processing the food product (102),
receiving (504) process event data (202) related to the food processing units of the food production system (100), wherein the process event data (202) comprises information about state changes of the food production units that occurred during processing of the food product (102) as well as points of time when the state changes occurred, , wherein the different states comprise a start-up state during which the food production units (104a-d, 106a-c) are prepared for food production, a recovery state during which the food product (102) held in the food production units (104a-e, 106a-c) are collected in a recovery tank, a cleaning-in-place state during which all or part of the food production units (104a-e, 106a-c) are cleaned, and a close-down state during which the food production units (104a-e, 106a-c) are emptied,
receiving (506) settings (204) of the processing units (104a-e) associated with different states,
determining (508) the settings used for the food production units (104a-e) during different time slots by combining the process event data (202) and the settings of the processing units (204) associated with the different states,
determining (510) the settings of the food production units (104a-e) used for processing the food product (102) by combining the process traceability data (200) and the settings used for the food production units during the different time slots, and
providing (512) the settings of the food production units (104a-e) used for processing the food product (102), further comprising
receiving (514) environmental impact data (406) associated with different settings for different food production units (104a-e),
determining (516) an environmental impact measure (412), such as carbon footprint, of the food product (102) by combining the settings of the food production units (104a-e) used for processing the food product (102) with the environmental impact data (406), further comprising
retrieving (518) meter coverage data (300), wherein the meter coverage data (300) comprises links between the food processing units of the food processing system (100) and meters (114a-e, 116a-c, 120a-e, 122) provided in the food processing system (100),
combining (520) the process traceability data (200) and the meter coverage data (300) to identify a first type of meters (114a-e, 116a-c) and a second type of meters (120a-e, 122), wherein the first type of meters (114a-e, 116a-c) is related to single food processing units used for processing the food product (102) and the second type of meters (120a-e, 122) are related to multiple food processing units of which at least a sub-set is used for processing the food product (102),
retrieving (522) first type utility consumption data (402) for the first type meters (114a-e, 116a-c) for the time slots the food processing units linked to the first-type meters (114a-e, 116a-c) were used for processing the food product (102),
retrieving (524) second type utility consumption data (404) for the second type meters (120a-e, 122) for the time slots the sub-set of the food processing units linked to the second-type meters (120a-e, 122) were used for processing the food product (102),
retrieving (526) distribution keys (408) for the second-type utility consumption data (404),
assigning (528) a part of the second-type utility consumption data (404) to the sub-set of food processing units by using the distribution keys (408),
aggregating (530) the first-type utility consumption data (402) and the part of the second-type utility consumption data (404) into a total utility consumption data (410) for the food product (102),
transforming (532) the total utility consumption data (410) into the
environmental impact measure (412), further comprising
filling (546) the food product (102) into a package (103), wherein the package (103) is provided with an identification mark (105), and
linking (548) the identification mark (105) to the environmental impact measure (412).

2. The method according to claim 1, wherein the first and/or second utility
consumption data comprises water usage, electricity usage, pressurized air usage, sterile air usage, amount of food waste generated, and/or amount of chemicals, such as cleaning agents, used.

3. The method according to claim 2, further comprising
receiving (534) electricity production data (414) for different time slots from an electricity generation plant (416), such as a solar cell plant, placed on a food production site together with the food processing system (100),
adjusting (536) the environmental impact measure (412) by combining the electricity usage of the first and/or second utility consumption data (402, 404) and the electricity production data (414) for the different time slots.

4. The method according to claim 3, further comprising
receiving (538) weather forecast data (418),
forecasting (540) the electricity production data (414) for different time slots based on the weather forecast data (418),
identifying (542) a suggested production scheme (420), including start and stop points of time, based on forecasted alternatives for the different time slots in combination with estimated electricity usage of the first and/or second utility consumption data (402, 404) for a coming food processing of the food product (102),
providing (544) the suggested production scheme (420).

5. The method according to any of the previous claims, wherein the identification mark (105) is linked to a set of instructions configured to be executed on a user device (600) when the identification mark (105) is read by the user device (600), further comprising
receiving (550) an identification mark read receipt (602) indicating that the identification mark (105) has been read by the user device (600),
transmitting (552) a location request (604) to the user device (600),
receiving (554) user device location data (606) in response to the location request (604),
retrieving (556) food production plant location data (608) using the identification mark (105), and
determining (558) a transportation environmental impact measure (610) based on the user device location data (606) and the food production plant location data (608).

6. The method according to any one of the previous claims, further comprising
filling (562) the food product (102) into the package (103),
printing (564) text and/or numbers corresponding to the environmental impact measure (412) on the package (103).

7. The method according to any one of the previous claims, further comprising
receiving (566) food product raw material environmental impact measure (422) linked to food raw material (101), and
wherein the step of determining (514) the environmental impact measure (412) further comprises adding the food product raw material environmental impact measure (422).

8. The method according to any one of the previous claims, further comprising
receiving (568) a packaging material batch (124) arranged to be formed into the package (103),
reading (570) a packaging material batch identification code (126) placed on the packaging material batch (124),
transmitting (572) a request for a packaging material environmental impact measure (424) linked to the packaging material batch identification code (126), and
receiving (574) the packaging material environmental impact measure (424) linked to the packaging material batch identification code (126) in response to the request,
wherein the step of determining the environmental impact measure (514) further comprises adding the packaging material environmental impact measure (424).

9. A food processing system (100) arranged to produce a food product (102), said system comprising
food processing units (104a-e, 106a-c), and
a data processing apparatus (112) comprising
a traceability module (128) configured to process traceability data (200) related to the food product (102), wherein the process traceability data (200) comprises information about which food processing units of the food processing system (100) that were involved in processing the food product (102) as well as during which time slots the food processing units were involved for processing the food product (102),
a process event module (130) configured to receive process event data (202) related to the food processing units of the food production system (100), wherein the process event data (202) comprises information about state changes of the food production units that occurred during processing of the food product (102) as well as points of time when the state changes occurred,
a settings-to-state identifier module (132) configured to receive settings (204) of the processing units (104a-e, 106a-c) associated with different states, and determine the settings used for the food production units during different time slots by combining the process event data (202) and the settings of the processing units (204) associated with the different states, and
a settings-for-food product module (134) configured to determine the settings of the food production units (104a-e, 106a-c) used for processing the food product (102) by combining the process traceability data (200) and the settings (204) used for the food production units (104a-e, 106a-c) during the different time slots, further comprising
an environmental impact measure determination module (136) configured to receive environmental impact data (406) associated with different settings for different food production units (104a-e, 106a-c), and to determine an environmental impact measure (412), such as carbon footprint, of the food product (102) by combining the settings of the food production units (104a-e, 106a-c) used for processing the food product (102) with the environmental impact data (406), wherein the different states comprise a start-up state during which the food production units are prepared for food production, a recovery state during which the food product held in the food production units are collected in a recovery tank, a cleaning-in-place state during which all or part of the food production units are cleaned, and a close-down state during which the food production units are emptied.

## Patentansprüche

1. Computerimplementiertes Verfahren (500) zum Überwachen eines Lebensmittelverarbeitungssystems (100), das dazu eingerichtet ist, ein Lebensmittelerzeugnis (102) zu erzeugen, unter Verwendung einer Datenverarbeitungseinrichtung (112), wobei das Verfahren Folgendes umfasst
Empfangen (502) von Prozessrückverfolgbarkeitsdaten (200) in Bezug auf das Lebensmittelerzeugnis (102), wobei die Prozessrückverfolgbarkeitsdaten (200) Informationen darüber umfassen, welche Lebensmittelverarbeitungseinheiten (104a-e) des Lebensmittelverarbeitungssystems (100) in die Verarbeitung des Lebensmittelerzeugnisses (102) eingebunden waren sowie während welcher Zeitabschnitte die Lebensmittelverarbeitungseinheiten für die Verarbeitung des Lebensmittelerzeugnisses (102) eingebunden waren,
Empfangen (504) von Prozessereignisdaten (202) in Bezug auf die Lebensmittelverarbeitungseinheiten des Lebensmittelerzeugungssystems (100), wobei die Prozessereignisdaten (202) Informationen über Zustandsänderungen der Lebensmittelerzeugungseinheiten, die während einer Verarbeitung des Lebensmittelerzeugnisses (102) auftraten, sowie Zeitpunkte, zu denen die Zustandsänderungen auftraten, umfassen, wobei die unterschiedlichen Zustände einen Anfahrzustand, während welchem die Lebensmittelerzeugungseinheiten (104a-d, 106a-c) für die Lebensmittelerzeugung vorbereitet werden, einen Rückgewinnungszustand, während welchem das in den Lebensmittelerzeugungseinheiten (104a-e, 106a-c) gehaltene Lebensmittelerzeugnis (102) in einem Rückgewinnungstank gesammelt wird, einen Vor-Ort-Reinigungszustand, während welchem die gesamten oder ein Teil der Lebensmittelerzeugungseinheiten (104a-e, 106a-c) gereinigt werden, und einen Abschaltzustand, während welchem die Lebensmittelerzeugungseinheiten (104a-e, 106a-c) geleert werden, umfassen,
Empfangen (506) von Einstellungen (204) der Verarbeitungseinheiten (104a-e), die mit unterschiedlichen Zuständen assoziiert sind,
Bestimmen (508) der Einstellungen, die für die Lebensmittelerzeugungseinheiten (104a-e) während unterschiedlicher Zeitabschnitte verwendet werden, durch Kombinieren der Prozessereignisdaten (202) und der Einstellungen der Verarbeitungseinheiten (204), die mit den unterschiedlichen Zuständen assoziiert sind,
Bestimmen (510) der Einstellungen der Lebensmittelerzeugungseinheiten (104a-e), die zur Verarbeitung des Lebensmittelerzeugnisses (102) verwendet werden, durch Kombinieren der Prozessrückverfolgbarkeitsdaten (200) und der Einstellungen, die für die Lebensmittelerzeugungseinheiten während der unterschiedlichen Zeitabschnitte verwendet werden, und Bereitstellen (512) der Einstellungen der Lebensmittelerzeugungseinheiten (104a-e), die zur Verarbeitung des Lebensmittelerzeugnisses (102) verwendet werden, ferner umfassend
Empfangen (514) von Umweltauswirkungsdaten (406), die mit unterschiedlichen Einstellungen für unterschiedliche Lebensmittelerzeugungseinheiten (104a-e) assoziiert sind,
Bestimmen (516) einer Umweltauswirkungsmessgröße (412), wie etwa eines Kohlendioxidfußabdrucks, des Lebensmittelerzeugnisses (102) durch Kombinieren der Einstellungen der Lebensmittelerzeugungseinheiten (104a-e), die zur Verarbeitung des Lebensmittelerzeugnisses (102) verwendet werden, mit den Umweltauswirkungsdaten (406), ferner umfassend
Abrufen (518) von Zählerabdeckungsdaten (300), wobei die Zählerabdeckungsdaten (300) Verknüpfungen zwischen den Lebensmittelverarbeitungseinheiten des Lebensmittelverarbeitungssystems (100) und in dem Lebensmittelverarbeitungssystem (100) bereitgestellten Zählern (114a-e, 116a-c, 120a-e, 122) umfassen,
Kombinieren (520) der Prozessrückverfolgbarkeitsdaten (200) und der Zählerabdeckungsdaten (300), um eine erste Art von Zählern (114a-e, 116a-c) und eine zweite Art von Zählern (120a-e, 122) zu identifizieren, wobei die erste Art von Zählern (114a-e, 116a-c) mit einzelnen Lebensmittelverarbeitungseinheiten in Bezug steht, die zur Verarbeitung des Lebensmittelerzeugnisses (102) verwendet werden, und die zweite Art von Zählern (120a-e, 122) mit mehreren Lebensmittelverarbeitungseinheiten in Bezug stehen, von denen zumindest ein Teilsatz zur Verarbeitung des Lebensmittelerzeugnisses (102) verwendet wird,
Abrufen (522) von Betriebsmittelverbrauchsdaten (402) der ersten Art für die Zähler (114a-e, 116a-c) der ersten Art für die Zeitabschnitte, in denen die mit den Zählern (114a-e, 116a-c) der ersten Art verknüpften Lebensmittelverarbeitungseinheiten zur Verarbeitung des Lebensmittelerzeugnisses (102) verwendet wurden,
Abrufen (524) von Betriebsmittelverbrauchsdaten (404) der zweiten Art für die Zähler (120a-e, 122) der zweiten Art für die Zeitabschnitte, in denen der Teilsatz der mit den Zählern (120a-e, 122) der zweiten Art verknüpften Lebensmittelverarbeitungseinheiten zur Verarbeitung des Lebensmittelerzeugnisses (102) verwendet wurde,
Abrufen (526) von Verteilungsschlüsseln (408) für die Betriebsmittelverbrauchsdaten (404) der zweiten Art, Zuweisen (528) eines Teils der Betriebsmittelverbrauchsdaten (404) der zweiten Art zu dem Teilsatz von Lebensmittelverarbeitungseinheiten unter Verwendung der Verteilungsschlüssel (408),
Aggregieren (530) der Betriebsmittelverbrauchsdaten (402) der ersten Art und des Teils der Betriebsmittelverbrauchsdaten (404) der zweiten Art in Gesamtbetriebsmittelverbrauchsdaten (410) für das Lebensmittelerzeugnis (102),
Umwandeln (532) der Gesamtbetriebsmittelverbrauchsdaten (410) in die Umweltauswirkungsmessgröße (412), ferner umfassend
Füllen (546) des Lebensmittelerzeugnisses (102) in eine Verpackung (103), wobei die Verpackung (103) mit einem Identifikationskennzeichen (105) versehen ist, und Verknüpfen (548) des Identifikationskennzeichens (105) mit der Umweltauswirkungsmessgröße (412).

2. Verfahren nach Anspruch 1, wobei die ersten und/oder die zweiten Betriebsmittelverbrauchsdaten einen Wasserverbrauch, einen Stromverbrauch, einen Druckluftverbrauch, einen Sterilluftverbrauch, eine Menge an erzeugtem Lebensmittelabfall und/oder eine Menge an verwendeten Chemikalien, wie etwa Reinigungsmitteln, umfassen.

3. Verfahren nach Anspruch 2, ferner umfassend
Empfangen (534) von Stromerzeugungsdaten (414) für unterschiedliche Zeitabschnitte von einer Stromerzeugungsanlage (416), wie etwa einer Solarzellenanlage, die zusammen mit dem Lebensmittelverarbeitungssystem (100) an einer Lebensmittelerzeugungsstätte angeordnet ist,
Anpassen (536) der Umweltauswirkungsmessgröße (412) durch Kombinieren des Stromverbrauchs der ersten und/oder der zweiten Betriebsmittelverbrauchsdaten (402, 404) und der Stromerzeugungsdaten (414) für die unterschiedlichen Zeitabschnitte.

4. Verfahren nach Anspruch 3, ferner umfassend
Empfangen (538) von Wetterprognosedaten (418), Prognostizieren (540) der Stromerzeugungsdaten (414) für unterschiedliche Zeitabschnitte basierend auf den Wetterprognosedaten (418),
Identifizieren (542) eines vorgeschlagenen Erzeugungsschemas (420), das Start- und Stoppzeitpunkte umfasst, basierend auf prognostizierten Alternativen für die unterschiedlichen Zeitabschnitte in Kombination mit einem geschätzten Stromverbrauch der ersten und/oder der zweiten Betriebsmittelverbrauchsdaten (402, 404) für eine zukünftige Lebensmittelverarbeitung des Lebensmittelerzeugnisses (102),
Bereitstellen (544) des vorgeschlagenen Erzeugungsschemas (420).

5. Verfahren nach einem der vorhergehenden Ansprüche, wobei das Identifikationskennzeichen (105) mit einem Satz von Anweisungen verknüpft ist, die dazu ausgelegt sind, auf einer Benutzervorrichtung (600) ausgeführt zu werden, wenn das Identifikationskennzeichen (105) durch die Benutzervorrichtung (600) ausgelesen wird, ferner umfassend
Empfangen (550) einer Identifikationskennzeichenlesebestätigung (602), die angibt, dass das Identifikationskennzeichen (105) durch die Benutzervorrichtung (600) ausgelesen wurde, Übertragen (552) einer Standortanforderung (604) an die Benutzervorrichtung (600),
Empfangen (554) von Benutzervorrichtungsstandortdaten (606) als Reaktion auf die Standortanforderung (604),
Abrufen (556) von Lebensmittelerzeugungsanlagenstandortdaten (608) unter Verwendung des Identifikationskennzeichens (105), und Bestimmen (558) einer Transportumweltauswirkungsmessgröße (610) basierend auf den Benutzervorrichtungsstandortdaten (606) und den Lebensmittelerzeugungsanlagenstandortdaten (608).

6. Verfahren nach einem der vorhergehenden Ansprüche, ferner umfassend
Füllen (562) des Lebensmittelerzeugnisses (102) in die Verpackung (103),
Drucken (564) von Text und/oder Zahlen, die der Umweltauswirkungsmessgröße (412) entsprechen, auf die Verpackung (103).

7. Verfahren nach einem der vorhergehenden Ansprüche, ferner umfassend
Empfangen (566) einer Lebensmittelerzeugnisrohmaterialumweltauswirkungsmessgr öße (422), die mit einem Lebensmittelrohmaterial (101) verknüpft ist, und
wobei der Schritt des Bestimmens (514) der Umweltauswirkungsmessgröße (412) ferner Hinzufügen der Lebensmittelerzeugnisrohmaterialumweltauswirkungsmessgr öße (422) umfasst.

8. Verfahren nach einem der vorhergehenden Ansprüche, ferner umfassend
Empfangen (568) einer Verpackungsmaterialcharge (124), die dazu eingerichtet ist, in die Verpackung (103) geformt zu werden,
Auslesen (570) eines auf der Verpackungsmaterialcharge (124) angeordneten Verpackungsmaterialchargenidentifikationscodes (126), Übertragen (572) einer Anforderung für eine Verpackungsmaterialumweltauswirkungsmessgröße (424), die mit dem Verpackungsmaterialchargenidentifikationscode (126) verknüpft ist, und
Empfangen (574) der mit dem Verpackungsmaterialchargenidentifikationscode (126) verknüpften Verpackungsmaterialumweltauswirkungsmessgröße (424) als Reaktion auf die Anforderung,
wobei der Schritt des Bestimmens der Umweltauswirkungsmessgröße (514) ferner Hinzufügen der Verpackungsmaterialumweltauswirkungsmessgröße (424) umfasst.

9. Lebensmittelverarbeitungssystem (100), das dazu eingerichtet ist, ein Lebensmittelerzeugnis (102) zu erzeugen, wobei das System Folgendes umfasst Lebensmittelverarbeitungseinheiten (104a-e, 106a-c), und eine Datenverarbeitungseinrichtung (112), die Folgendes umfasst
ein Rückverfolgbarkeitsmodul (128), das dazu ausgelegt ist, Rückverfolgbarkeitsdaten (200) in Bezug auf das Lebensmittelerzeugnis (102) zu verarbeiten, wobei die Prozessrückverfolgbarkeitsdaten (200) Informationen darüber umfassen, welche Lebensmittelverarbeitungseinheiten des Lebensmittelverarbeitungssystems (100) in die Verarbeitung des Lebensmittelerzeugnisses (102) eingebunden waren sowie während welcher Zeitabschnitte die Lebensmittelverarbeitungseinheiten für die Verarbeitung des Lebensmittelerzeugnisses (102) eingebunden waren,
ein Prozessereignismodul (130), das dazu ausgelegt ist, Prozessereignisdaten (202) in Bezug auf die Lebensmittelverarbeitungseinheiten des Lebensmittelerzeugungssystems (100) zu empfangen, wobei die Prozessereignisdaten (202) Informationen über Zustandsänderungen der Lebensmittelerzeugungseinheiten, die während einer Verarbeitung des Lebensmittelerzeugnisses (102) auftraten, sowie Zeitpunkte, zu denen die Zustandsänderungen auftraten, umfassen,
ein Einstellungen-Zustand-Identifizierungsmodul (132), das dazu ausgelegt ist, Einstellungen (204) der Verarbeitungseinheiten (104a-e, 106a-c) zu empfangen, die mit unterschiedlichen Zuständen assoziiert sind, und die Einstellungen, die für die Lebensmittelerzeugungseinheiten während unterschiedlicher Zeitabschnitte verwendet werden, durch Kombinieren der Prozessereignisdaten (202) und der Einstellungen der Verarbeitungseinheiten (204), die mit den unterschiedlichen Zuständen assoziiert sind, zu bestimmen, und
ein Lebensmittelerzeugniseinstellungsmodul (134), das dazu ausgelegt ist, die Einstellungen der Lebensmittelerzeugungseinheiten (104a-e, 106a-c), die zur Verarbeitung des Lebensmittelerzeugnisses (102) verwendet werden, durch Kombinieren der Prozessrückverfolgbarkeitsdaten (200) und der Einstellungen (204), die für die Lebensmittelerzeugungseinheiten (104a-e, 106a-c) während der unterschiedlichen Zeitabschnitte verwendet werden, zu bestimmen, ferner umfassend
ein Umweltauswirkungsmessgrößenbestimmungsmodul (136), das dazu ausgelegt ist, Umweltauswirkungsdaten (406) zu empfangen, die mit unterschiedlichen Einstellungen für unterschiedliche Lebensmittelerzeugungseinheiten (104a-e, 106a-c) assoziiert sind, und eine Umweltauswirkungsmessgröße (412), wie etwa einen Kohlendioxidfußabdruck, des Lebensmittelerzeugnisses (102) durch Kombinieren der Einstellungen der Lebensmittelerzeugungseinheiten (104a-e, 106a-c), die zur Verarbeitung des Lebensmittelerzeugnisses (102) verwendet werden, mit den Umweltauswirkungsdaten (406) zu bestimmen, wobei die unterschiedlichen Zustände einen Anfahrzustand, während welchem die Lebensmittelerzeugungseinheiten für die Lebensmittelerzeugung vorbereitet werden, einen Rückgewinnungszustand, während welchem das in den Lebensmittelerzeugungseinheiten gehaltene Lebensmittelerzeugnis in einem Rückgewinnungstank gesammelt wird, einen Vor-Ort-Reinigungszustand, während welchem die gesamten oder ein Teil der Lebensmittelerzeugungseinheiten gereinigt werden, und einen Abschaltzustand, während welchem die Lebensmittelerzeugungseinheiten geleert werden, umfassen.

## Revendications

1. Procédé (500), mis en œuvre par ordinateur, de surveillance d'un système (100) de transformation d'aliments, conçu pour produire un produit alimentaire (102), à l'aide d'un appareil (112) de traitement de données, ledit procédé comprenant
la réception (502) de données (200) de traçabilité de processus liées au produit alimentaire (102), les données (200) de traçabilité de processus comprenant des informations indiquant quelles unités (104a-e) de transformation d'aliments du système (100) de transformation d'aliments qui ont été impliquées dans le traitement du produit alimentaire (102) ainsi que les créneaux temporels pendant lesquels les unités de transformation d'aliments ont été impliquées dans le traitement du produit alimentaire (102),
la réception (504) de données (202) d'événements de traitement liées aux unités de transformation d'aliments du système (100) de production d'aliments, les données (202) d'événements de traitement comprenant des informations concernant les changements d'état des unités de production d'aliments qui se sont produits pendant le traitement du produit alimentaire (102) ainsi que des instants où les changements d'état se sont produits, les différents états comprenant un état de démarrage pendant lequel les unités (104a-d, 106a-c) de production d'aliments sont préparées pour la production d'aliments, un état de récupération pendant lequel les produits alimentaires (102) contenus dans les unités (104a-e, 106a-c) de production d'aliments sont collectés dans un bac de récupération, un état de nettoyage sur place pendant lequel tout ou partie des unités (104a-e, 106a-c) de production d'aliments sont nettoyés, et un état de fermeture pendant lequel les unités (104a-e, 106a-c) de production d'aliments sont vidées,
la réception (506) de réglages (204) des unités (104a-e) de transformation associés à des états différents,
la détermination (508) des réglages utilisés pour les unités (104a-e) de production d'aliments pendant différents créneaux temporels en combinant les données (202) d'événements de processus et les réglages (204) des unités de traitement associés aux différents états,
la détermination (510) des réglages des unités (104a-e) de production d'aliments utilisées pour transformer le produit alimentaire (102) en combinant les données (200) de traçabilité de processus et les réglages utilisés pour les unités de production d'aliments pendant les différents créneaux temporels, et
la fourniture (512) des réglages des unités (104a-e) de production d'aliments utilisées pour le traitement du produit alimentaire (102), ce qui comprend en outre la réception (514) de données (406) d'impact environnemental associées à différents réglages pour différentes unités (104a-e) de production d'aliments,
la détermination (516) d'une mesure (412) d'impact environnemental, telle que l'empreinte carbone, du produit alimentaire (102) en combinant les réglages des unités (104a-e) de production d'aliments utilisées pour transformer le produit alimentaire (102) avec les données (406) d'impact environnemental, ce qui comprend en outre la récupération (518) de données (300) de couverture de compteurs, les données (300) de couverture de compteurs comprenant des liaisons entre les unités de transformation d'aliments du système (100) de transformation d'aliments et des compteurs (114a-e, 116a-c, 120a-e, 122) placés dans le système (100) de transformation d'aliments,
la combinaison (520) des données (200) de traçabilité de processus et des données (300) de couverture de compteurs pour identifier un premier type de compteurs (114a-e, 116a-c) et un second type de compteurs (120a-e, 122), le premier type de compteurs (114a-e, 116a-c) étant lié à des unités uniques de transformation d'aliments utilisées pour transformer le produit alimentaire (102) et le second type de compteurs (120a-e, 122) étant lié à plusieurs unités de transformation d'aliments dont au moins un sous-ensemble est utilisé pour transformer le produit alimentaire (102),
la récupération (522) de données (402) de consommation d'utilité publique de premier type pour les compteurs (114a-e, 116a-c) du premier type pour les créneaux temporels où les unités de transformation d'aliments reliées aux compteurs (114a-e, 116a-c) du premier type ont été utilisées pour transformer le produit alimentaire (102),
la récupération (524) de données (404) de consommation d'utilité publique de second type pour les compteurs (120a-e, 122) du second type pour les créneaux temporels où le sous-ensemble des unités de transformation d'aliments reliées aux compteurs (120a-e, 122) du second type a été utilisé pour transformer le produit alimentaire (102),
la récupération (526) de clés (408) de distribution pour les données (404) de consommation d'utilité publique de second type,
l'attribution (528) d'une partie des données (404) de consommation d'utilité publique de second type au sous-ensemble d'unités de transformation des aliments en utilisant les clés (408) de distribution,
l'agrégation (530) des données (402) de consommation d'utilité publique de premier type et de la partie des données (404) de consommation d'utilité publique de second type en données (410) de consommation totale d'utilité publique pour le produit alimentaire (102),
la transformation (532) des données (410) de consommation totale en mesure (412) d'impact environnemental, ce qui comprend en outre
le remplissage (546) d'un emballage (103) avec le produit alimentaire (102), l'emballage (103) étant muni d'une marque (105) d'identification, et
le fait de lier (548) la marque (105) d'identification à la mesure (412) d'impact environnemental.

2. Procédé selon la revendication 1, les premières et/ou secondes données de consommation d'utilité publique comprenant la consommation d'eau, la consommation d'électricité, la consommation d'air sous pression, la consommation d'air stérile, la quantité de déchets alimentaires générés et/ou la quantité de produits chimiques, tels que des agents de nettoyage, utilisés.

3. Procédé selon la revendication 2, comprenant en outre
la réception (534) de données (414) de production d'électricité pour différents créneaux temporels en provenance d'une centrale (416) de production d'électricité, telle qu'une centrale à cellules solaires, placée sur un site de production d'aliments conjointement avec le système (100) de transformation d'aliments,
l'ajustement (536) de la mesure (412) d'impact environnemental en combinant la consommation d'électricité des premières et/ou secondes données (402, 404) de consommation d'électricité et les données (414) de production d'électricité pour les différents créneaux temporels.

4. Procédé selon la revendication 3, comprenant en outre
la réception (538) de données (418) de prévisions météorologiques,
la prévision (540) des données (414) de production d'électricité pour différents créneaux horaires d'après les données (418) de prévisions météorologiques,
l'identification (542) d'un schéma (420) de production suggéré, incluant des instant de début et de fin, sur la base de variantes prévues pour les différents créneaux temporels en combinaison avec une consommation d'électricité estimées des première et/ou secondes données (402, 404) de consommation d'utilité publique pour une transformation alimentaire à venir du produit alimentaire (102),
la fourniture (544) du schéma (420) de production suggéré.

5. Procédé selon l'une quelconque des revendications précédentes, la marque (105) d'identification étant liée à un ensemble d'instructions configurées pour être exécutées sur un dispositif (600) d'utilisateur lorsque la marque (105) d'identification est lue par le dispositif (600) d'utilisateur, comprenant en outre
la réception (550) un reçu (602) de lecture de marque d'identification indiquant que la marque (105) d'identification a été lue par le dispositif (600) d'utilisateur,
la transmission (552) d'une demande (604) de localisation au dispositif (600) d'utilisateur,
la réception (554) des données (606) de localisation de dispositif d'utilisateur en réponse à la demande (604) de localisation,
la récupération (556) de données (608) de localisation d'usine de production d'aliments à l'aide de la marque (105) d'identification, et
la détermination (558) d'une mesure (610) d'impact environnemental de transport d'après les données (606) de localisation de dispositif d'utilisateur et les données (608) de localisation d'usine de production d'aliments.

6. Procédé selon l'une quelconque des revendications précédentes, comprenant en outre
le remplissage (562) de l'emballage (103) avec le produit alimentaire (102),
l'impression (564) de textes et/ou de nombres correspondant à la mesure (412) d'impact environnemental sur l'emballage (103).

7. Procédé selon l'une quelconque des revendications précédentes, comprenant en outre
la réception (566) d'une mesure (422) d'impact environnemental de matières premières de produit alimentaire liée à des matières premières alimentaires (101), et
l'étape de détermination (514) de la mesure (412) d'impact environnemental comprenant en outre l'ajout de la mesure (422) d'impact environnemental de matières premières de produit alimentaire.

8. Procédé selon l'une quelconque des revendications précédentes, comprenant en outre
la réception (568) d'un lot (124) de matériau d'emballage agencé pour être façonné en l'emballage (103),
la lecture (570) d'un code (126) d'identification de lot de matériau d'emballage placé sur le lot (124) de matériau d'emballage,
l'émission (572) d'une demande de mesure (424) d'impact environnemental du matériau d'emballage liée au code (126) d'identification de lot de matériau d'emballage, et
la réception (574) de la mesure (424) d'impact environnemental du matériau d'emballage liée au code (126) d'identification de lot de matériau d'emballage en réponse à la demande,
l'étape de détermination de la mesure d'impact environnemental (514) comprenant en outre l'ajout de la mesure (424) d'impact environnemental du matériau d'emballage.

9. Système (100) de transformation d'aliments agencé pour produire un produit alimentaire (102), ledit système comprenant
des unités (104a-e, 106a-c) de transformation d'aliments, et
un appareil (112) de traitement de données comprenant un module (128) de traçabilité configuré pour traiter des données (200) de traçabilité liées au produit alimentaire (102), les données (200) de traçabilité de processus comprenant des informations indiquant quelles unités de transformation d'aliments du système (100) de transformation d'aliments qui ont été impliquées dans le traitement du produit alimentaire (102) ainsi que les créneaux temporels pendant lesquels les unités de transformation d'aliments ont été impliquées dans le traitement du produit alimentaire (102),
un module (130) d'événements de processus configuré pour recevoir des données (202) d'événements de processus liées aux unités de transformation d'aliments du système (100) de production d'aliments, les données (202) d'événements de processus comprenant des informations concernant les changements d'état des unités de production d'aliments qui se sont produits pendant la transformation du produit alimentaire (102) ainsi que des instants où les changements d'état se sont produits,
un module (132) d'identification réglage-état configuré pour recevoir des réglages (204) des unités (104a-e, 106a-c) de transformation associés à différents états, et pour déterminer les réglages utilisés pour les unités de production d'aliments pendant différents créneaux temporels en combinant les données (202) d'événements de traitement et les réglages des unités (204) de transformation associés aux différents états, et
un module (134) de réglages pour produit alimentaire configuré pour déterminer les réglages des unités (104a-e, 106a-c) de production d'aliments utilisées pour transformer le produit alimentaire (102) en combinant les données (200) de traçabilité de processus et les réglages (204) utilisés pour les unités (104a-e, 106a-c) de production d'aliments pendant les différents créneaux temporels, ce qui comprend en outre
un module (136) de détermination de mesures d'impact environnemental configuré pour recevoir des données (406) d'impact environnemental associées à différents réglages pour différentes unités (104a-e, 106a-c) de production d'aliments, et pour déterminer une mesure (412) d'impact environnemental, telle que l'empreinte carbone, du produit alimentaire (102) en combinant les réglages des unités (104a-e, 106a-c) de production d'aliments utilisées pour transformer le produit alimentaire (102) avec les données (406) d'impact environnemental, les différents états comprenant un état de démarrage au cours duquel les unités de production d'aliments sont préparées pour la production d'aliments, un état de récupération au cours duquel les produits alimentaires contenus dans les unités de production d'aliments sont collectés dans un bac de récupération, un état de nettoyage sur place au cours duquel tout ou partie des unités de production d'aliments sont nettoyés, et un état de fermeture au cours duquel les unités de production d'aliments sont vidées.
